# EUROPÄISCHE PATENTSCHRIFT

(11) **EP 2 734 419 B1**
(45) Veröffentlichungstag und Bekanntmachung des Hinweises auf die Patenterteilung: **20.02.2019**
(21) Anmeldenummer: 12732674.2
(22) Anmeldetag: 06.07.2012
(51) Int. Cl.: B60S 1/38, B60S 1/40

(54) **WISCHVORRICHTUNG**
WIPER DEVICE
SYSTÈME D'ESSUIE-GLACE

(30) Priorität: 21.07.2011 DE 102011079530
(43) Veröffentlichungstag der Anmeldung: 28.05.2014
(73) Patentinhaber: Robert Bosch GmbH, 70442 Stuttgart (DE)
(72) Erfinder: BENNER, Andreas, Taipei 104 (TW); BAUMERT, Stefan, 76139 Karlsruhe (DE); PICHLER, Andreas, 76646 Bruchsal (DE); OBERT, Mike, 76593 Gernsbach (DE)
(86) Internationale Anmeldenummer: PCT/EP2012/063292
(87) Internationale Veröffentlichungsnummer: WO 2013/010825

(56) Entgegenhaltungen:
- DE-A1- 19 645 170
- DE-A1-102006 047 633
- DE-A1-102009 000 860
- DE-A1-102009 014 700
- US-A1- 2009 199 357

## Beschreibung

### Stand der Technik

Es ist bereits eine Wischvorrichtung mit einem Adapter, der eine Anlenkstelle zu einem Wischarm bildet und für eine translatorische Montage in einer Axialrichtung mit einem weiteren Adapter zumindest ein Formschlusselement aufweist, das zur formschlüssigen Verbindung in der Axialrichtung mit zumindest einem Formschlusselement des einen weiteren Adapters vorgesehen ist, vorgeschlagen worden. DE-A-102009000860 offenbart den Oberbegriff des Anspruchs 1.

### Offenbarung der Erfindung

Die Erfindung geht aus von einer Wischvorrichtung mit einem Adapter, der eine Anlenkstelle zu einem Wischarm oder einem Wischblatt bildet und für eine translatorische Montage in einer Axialrichtung mit einem weiteren Adapter zumindest ein Formschlusselement aufweist, das zur formschlüssigen Verbindung in der Axialrichtung mit zumindest einem Formschlusselement des einen weiteren Adapters vorgesehen ist.

Es wird vorgeschlagen, dass die Wischvorrichtung zumindest ein Betätigungselement aufweist, das zur Auslenkung des zumindest einen Formschlusselements bei einer Demontage dazu vorgesehen ist, händisch ausgelenkt zu werden. Dadurch kann eine Montage, insbesondere eine Demontage, für einen Benutzer besonders einfach und intuitiv gestaltet werden. Unter einem "Adapter" soll dabei insbesondere ein Wischarmadapter oder ein Wischblattadapter verstanden werden. Unter einem "Wischarmadapter" soll in diesem Zusammenhang insbesondere ein Adapter verstanden werden, der einen Kontaktbereich zu einem Wischarmbauteil aufweist und dazu vorgesehen ist, einen Kopplungsbereich des Wischarmbauteils für eine Kopplung und/oder Kontaktierung mit einem Wischblattadapter bereitzustellen. Bevorzugt ist das Wischarmbauteil an einem Wischerarm befestigbar. Unter einem "Wischblattadapter" soll in diesem Zusammenhang insbesondere ein Adapter verstanden werden, der einen Kontaktbereich zu einem Wischblattbauteil aufweist und mit dem Wischblattbauteil, in einem demontierten Zustand eines Wischblatts von einem Wischarm, zumindest in einem Betriebszustand unverlierbar verbunden und dazu vorgesehen ist, einen Kopplungsbereich des Wischblattbauteils für eine Kopplung und/oder Kontaktierung mit einem Wischarmadapter bereitzustellen. Unter einer "translatorischen Montage" soll insbesondere eine Montage verstanden, bei der zwei Bauteile, insbesondere die zwei Adapter, in einer geradlinigen Bewegung aufeinander zu bewegt und miteinander verbunden werden, dabei ist die Bewegung insbesondere vorteilhaft ausschließlich geradlinig. Unter einer "formschlüssigen Verbindung in Axialrichtung" soll insbesondere verstanden werden, dass ein Formschluss der Verbindung nur in Axialrichtung vorliegt und die formschlüssige Verbindung hauptsächlich, insbesondere vorteilhaft ausschließlich, in der Axialrichtung eine Kraft übertragen kann. Unter "vorgesehen" soll insbesondere speziell ausgelegt und/oder ausgestattet verstanden werden. Unter einem "Betätigungselement" soll dabei insbesondere ein Element verstanden werden, das zur Betätigung, insbesondere zu einer Druckbetätigung, durch den Benutzer vorgesehen ist und dazu insbesondere eine dazu vorgesehene Markierung und/oder Formgebung aufweist. Unter "auslenken" soll dabei insbesondere verstanden werden, dass das Formschlusselement aus einem Ursprungszustand, den es ohne äußere Krafteinwirkung einnimmt, ausgebogen wird.

Weiter wird vorgeschlagen, dass das zumindest eine Betätigungselement als Handbetätigungselement ausgebildet und dazu vorgesehen ist, händisch ausgelenkt zu werden. Dadurch kann der Benutzer das Formschlusselement besonders einfach und intuitiv mittels des zumindest einen Betätigungselements auslenken. Unter "händisch auslenken" soll insbesondere durch den Benutzer per Hand, werkzeuglos auslenken verstanden werden.

Des Weiteren wird vorgeschlagen, dass der Adapter als ein Wischarmadapter ausgebildet ist. Dadurch kann die formschlüssige Verbindung zwischen dem als Wischarmadapter ausgebildeten Adapter und dem weiteren Adapter besonders vorteilhaft ausgestaltet werden.

Ferner wird vorgeschlagen, dass die Axialrichtung parallel zu einer Vertikalachse verläuft. Dadurch kann das zumindest eine als Rastelement ausgebildete Formschlusselement besonders vorteilhaft ausgebildet werden, da entlang der Vertikalachse die geringsten Kräfte übertragen werden müssen. Unter einer "Vertikalachse" soll in diesem Zusammenhang insbesondere eine Achse verstanden werden, die senkrecht zu einer Auflagefläche des Wischblattadapters angeordnet ist. Unter einer "Auflagefläche" soll in diesem Zusammenhang insbesondere eine ebene Fläche verstanden werden, auf die der Wischarmadapter bei einem Montagevorgang aufsetzt und/oder die dazu vorgesehen ist, eine Hauptanpresskraft des Wischarmadapters auf den Wischblattadapter zu übertragen. Unter einer "Hauptanpresskraft" soll in diesem Zusammenhang insbesondere eine Kraft verstanden werden, die den Wischblattadapter und/oder ein Wischblatt in Richtung einer zu wischenden Oberfläche, wie insbesondere einer Kraftfahrzeugscheibe, drückt.

Weiter wird vorgeschlagen, dass das zumindest eine Formschlusselement an einer Außenseite des Adapters angeordnet ist. Dadurch kann eine Auslenkung des zumindest einen Formschlusselements durch den Benutzer besonders vorteilhaft und einfach erfolgen.

Unter einer "Außenseite des Adapters" soll insbesondere eine Außenseite verstanden werden, die einen Grundkörper des Adapters nach außen hin abschließt.

Des Weiteren wird vorgeschlagen, dass das Formschlusselement des Adapters als ein Rastelement ausgebildet ist, das dazu vorgesehen ist, während einer Montage ausgelenkt zu werden. Dadurch können die Adapter in der Axialrichtung besonders einfach miteinander verbunden werden. Unter einem "Rastelement" soll in diesem Zusammenhang insbesondere ein Element zur Herstellung einer Rastverbindung verstanden werden, das dazu vorgesehen ist, bei einer Montage elastisch ausgelenkt zu werden und durch eine Federwirkung in eine Formschlussverbindung einzurasten, wobei die Federwirkung grundsätzlich von einer separaten Feder erreicht werden kann, jedoch das Element vorzugsweise zur Erzeugung der Federwirkung als ein federelastisches Element ausgebildet ist.

Weiterhin wird vorgeschlagen, dass das zumindest eine als Rastelement ausgebildete Formschlusselement eine Auslenkrichtung aufweist, die zumindest im Wesentlichen in einer Betätigungsrichtung des zumindest einen Betätigungselements orientiert ist. Dadurch kann das Formschlusselement besonders einfach mittels des Betätigungselements ausgelenkt werden. Unter einer "Auslenkrichtung des Formschlusselements" soll dabei insbesondere eine Richtung verstanden werden, in die das Formschlusselement zum Lösen einer formschlüssigen Verbindung mit einem korrespondierenden Formschlusselement ausgelenkt werden muss. Unter einer "Betätigungsrichtung" soll dabei insbesondere eine Richtung verstanden werden, in die das zumindest eine Betätigungselement von dem Benutzer zum Auslenken des zumindest einen Formschlusselements ausgelenkt wird. Unter "zumindest im Wesentlichen in Betätigungsrichtung orientiert" soll in diesem Zusammenhang insbesondere verstanden werden, dass zwischen der Betätigungsrichtung und der Auslenkrichtung eine Abweichung von weniger als 22 Grad, vorzugsweise weniger als 30 Grad und besonders bevorzugt weniger als 10 Grad vorliegt.

Zudem wird vorgeschlagen, dass das zumindest eine als Rastelement ausgebildete Formschlusselement eine Auslenkrichtung aufweist, die zumindest im Wesentlichen entgegengesetzt zu der Betätigungsrichtung des zumindest einen Betätigungselements orientiert ist. Dadurch kann eine Kraft, die der Benutzer zum Auslenken des Formschlusselements auf das Betätigungselement ausüben muss, besonders vorteilhaft eingestellt werden. Unter "zumindest im Wesentlichen entgegengesetzt zu der Betätigungsrichtung orientiert" soll dabei insbesondere verstanden werden, dass zwischen der Auslenkrichtung und einer Antikoaxialen der Betätigungsrichtung eine Abweichung von weniger als 22 Grad, vorzugsweise weniger als 30 Grad und besonders bevorzugt weniger als 10 Grad vorliegt. Unter einer "Antikoaxialen der Betätigungsrichtung" soll insbesondere eine Richtung verstanden werden, die in einem Winkel von genau 180 Grad zu der Betätigungsrichtung steht.

Nach der Erfindung wird vorgeschlagen, dass der Adapter zumindest ein weiteres Formschlusselement aufweist, das zu einer formschlüssigen Verbindung mit dem weiteren Adapter vorgesehen ist, die dazu vorgesehen ist, irgendeine Rotation der Adapter zueinander zu verhindern. Dadurch kann eine Kraftübertragung zwischen den Adaptern besonders vorteilhaft gestaltet werden.

Zudem wird ein System mit der Wischvorrichtung und dem weiteren Adapter vorgeschlagen, wobei der weitere Adapter als ein Wischblattadapter ausgebildet ist. Dadurch kann eine besonders vorteilhafte und stabile Verbindung zu einem Wischblatt erreicht werden.

Weiter wird ein System mit einer Wischvorrichtung vorgeschlagen, wobei der weitere Adapter als eine Federschiene ausgebildet ist. Dadurch kann eine besonders bauraumgünstige Verbindung zu dem Wischblatt erreicht werden.

### Zeichnungen

Weitere Vorteile ergeben sich aus der folgenden Zeichnungsbeschreibung. In der Zeichnung sind acht Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Explosionsdarstellung eines erfindungsgemäßen Systems mit einer Wischvorrichtung in einem ersten Ausführungsbeispiel,
- Fig. 2: eine perspektivische Ansicht des Systems mit der Wischvorrichtung nach Figur 1,
- Fig. 3: eine perspektivische Ansicht des Systems mit der Wischvorrichtung in einem zweiten Ausführungsbeispiel,
- Fig. 4: eine perspektivische Ansicht des Systems mit der Wischvorrichtung in einem dritten Ausführungsbeispiel,
- Fig. 5: eine perspektivische Ansicht des Systems mit der Wischvorrichtung in einem vierten Ausführungsbeispiel,
- Fig. 6: eine perspektivische Ansicht des Systems mit der Wischvorrichtung in einem fünften Ausführungsbeispiel,
- Fig. 7: eine perspektivische Ansicht des Systems mit der Wischvorrichtung in einem sechsten Ausführungsbeispiel,
- Fig. 8: eine perspektivische Ansicht des Systems mit der Wischvorrichtung in einem siebten Ausführungsbeispiel und
- Fig. 9: eine perspektivische Ansicht des Systems mit der Wischvorrichtung in einem achten Ausführungsbeispiel.

### Beschreibung der Ausführungsbeispiele

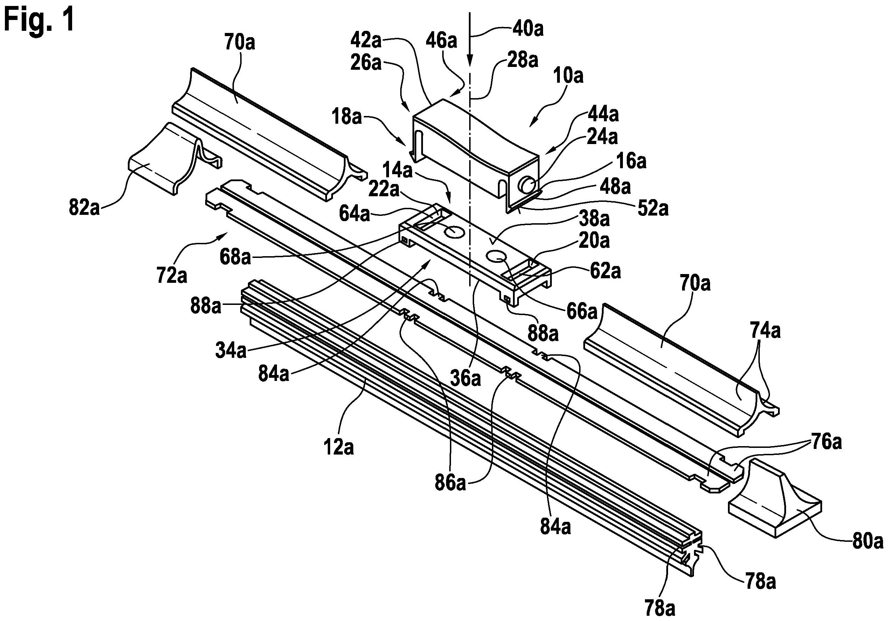

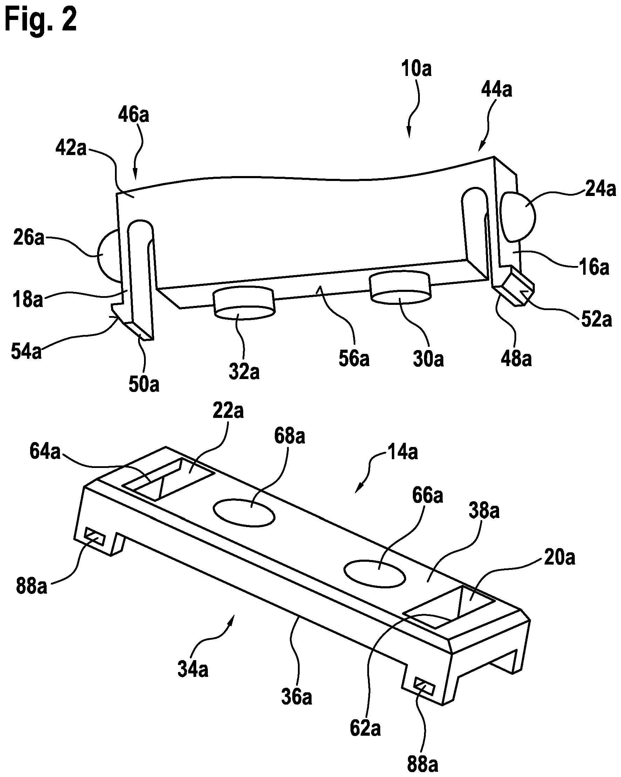

Figur 1 und Figur 2 zeigen ein erfindungsgemäßes System mit einer Wischvorrichtung eines Kraftfahrzeugs in einem ersten Ausführungsbeispiel. Die Wischvorrichtung weist einen Adapter 10a auf, der eine nicht näher dargestellte Anlenkstelle zu einem Wischarm aufweist. Der Adapter 10a, der die Anlenkstelle zu dem Wischarm aufweist, ist als ein Wischarmadapter ausgebildet. Je nach Ausführungsform des Wischarms muss der als Wischarmadapter ausgebildete Adapter 10a ausgetauscht werden. Ausführungsformen der besagten Anlenkstelle des Adapters 10a sind dem Fachmann allgemein bekannt und aus Gründen der Übersichtlichkeit nicht dargestellt.

Weiter umfasst das System einen weiteren Adapter 14a und ein Wischblatt 12a. Der weitere Adapter 14a weist eine Anlenkstelle 34a für das Wischblatt 12a auf. Der weitere Adapter 14a, der die Anlenkstelle für das Wischblatt 12a aufweist, ist als ein Wischblattadapter ausgebildet. Der als Wischarmadapter ausgebildete Adapter 10a ist von dem als Wischblattadapter ausgebildeten weiteren Adapter 14a lösbar und somit austauschbar ausgebildet.

Der als Wischblattadapter ausgebildete weitere Adapter 14a weist einen Grundkörper 36a auf. Ferner ist der Grundkörper 36a von einem Kunststoff-Spritzgussteil gebildet. Es ist in diesem Zusammenhang auch denkbar, den Grundkörper 36a aus einem Metallteil, wie insbesondere aus einem Metallblech, oder einem anderen, dem Fachmann als sinnvoll erscheinenden Material zu bilden. Der Grundkörper 36a umfasst eine ebene Auflagefläche 38a. Die Auflagefläche 38a dient bei einem Montagevorgang als Anlage für den als Wischarmadapter ausgebildeten Adapter 10a. Der Adapter 10a wird bei einem Montagevorgang auf die Auflagefläche 38a aufgesetzt. Eine Vertikalachse 28a ist senkrecht zur Auflagefläche 38a des als Wischblattadapter ausgebildeten Adapters 14a angeordnet. Zudem ist die Vertikalachse 28a parallel zu einer Hauptanpresskraft 40a des als Wischarmadapter ausgebildeten Adapters 10a angeordnet. Die Hauptanpresskraft 40a wird durch ein auf den Wischarm wirkendes Drehmoment erzeugt und drückt den als Wischblattadapter ausgebildeten weiteren Adapter 14a und das mit dem weiteren Adapter 14a verbundene gelenkfreie Wischblatt 12a in Richtung einer nicht näher dargestellten zu wischenden Kraftfahrzeugscheibe. Eine Horizontalachse ist parallel zu einer Haupterstreckungsrichtung des Wischblatts 12a angeordnet. Der Adapter 10a ist für eine translatorische Montage in einer Axialrichtung mit dem weiteren Adapter 14a vorgesehen. Die Axialrichtung verläuft parallel zu der Vertikalachse 28a. Der Adapter 10a weist einen Grundkörper 42a auf, der an zwei gegenüberliegenden Seiten jeweils ein Formschlusselement 16a, 18a umfasst. Die zwei Formschlusselemente 16a, 18a sind zur formschlüssigen Verbindung des Adapters 10a in der Axialrichtung vorgesehen. Die Formschlusselemente 16a, 18a sind an einer Außenseite 44a, 46a des Adapters 10a angeordnet und begrenzen den Adapter 10a jeweils an einem orthogonal zu der Horizontalachse orientierten Ende des Adapters 10a. Die Formschlusselemente 16a, 18a sind einstückig mit dem Grundkörper 42a des Adapters 10 ausgebildet. Dabei sind die Formschlusselemente 16a, 18a in einem, dem weiteren Adapter 14a in einem montierten Zustand abgewandten Außenbereich des Adapters 10a mit dem Grundkörper 42a verbunden. Die Formschlusselemente 16a, 18a des Adapters 10a sind als Rastelemente ausgebildet. Sie werden bei einer Montage mit dem weiteren Adapter 14a in einer Auslenkrichtung ausgelenkt. Die Auslenkrichtung ist dabei zumindest im Wesentlichen parallel zu der Horizontalachse orientiert. Die als Rastelemente ausgebildeten Formschlusselemente 16a, 18a sind länglich ausgebildet und weisen an ihrer, dem weiteren Adapter 14a in einem montierten Zustand zugewandten Seite eine Hakenform 48a, 50a auf. Die Hakenformen 48a, 50a sind dabei jeweils nach außen, also von einer Mittelebene des Adapters 10a weg gerichtet. Die Hakenformen 48a, 50a bilden an ihrer Unterseite jeweils eine Auslenkschräge 52a, 54a aus, die während eines Montagevorgangs dazu vorgesehen ist, das entsprechende Formschlusselement 16a, 18a durch Kontakt mit dem weiteren Adapter 14a auszulenken. Die Auslenkschrägen 52a, 54a sind ebenfalls von der Mittelebene des Adapters weg gerichtet, so dass die Formschlusselemente 16a, 18a während der Montage mittels der Auslenkschrägen 52a, 54a nach innen, in Richtung der Mittelebene des Adapters 10a ausgelenkt werden.

Die Wischvorrichtung umfasst zwei Betätigungselemente 24a, 26a, die zur Auslenkung der Formschlusselemente 16a, 18a des Adapters 10a bei einer Demontage dazu vorgesehen sind, ausgelenkt zu werden. Dabei sind die Betätigungselemente 24a, 26a als Handbetätigungselemente ausgebildet und dazu vorgesehen, von einem Benutzer händisch ausgelenkt zu werden. Die Betätigungselemente 24a, 26a sind als Erhebungen auf einer dem Grundkörper 42a des Adapters 10a abgewandten Außenseite der Formschlusselemente 16a, 18a ausgebildet. Dabei sind die Betätigungselemente 24a, 26a einstückig mit den Formschlusselementen 16a, 18a ausgebildet. Dabei sind die Betätigungselemente 24a, 26a aus einem gleichen Material gebildet wie die Formschlusselemente 16a, 18a. Grundsätzlich ist es dabei aber auch denkbar, dass die Betätigungselemente 24a, 26a aus einem anderen Material, wie beispielsweise einem gummiartigen Material oder einem anderen, dem Fachmann als sinnvoll erscheinendem Material, gebildet sind. Dabei ist es denkbar, dass die Betätigungselemente 24a, 26a beispielsweise durch eine Klebeverbindung oder eine andere, dem Fachmann als sinnvoll erscheinende Verbindungsmethode an den Formschlusselementen 16a, 18a angebunden sind. Zur Kennzeichnung der Betätigungselemente 24a, 26a als Betätigungselemente, die durch den Benutzer betätigbar sind, können die Betätigungselemente eine bestimmte Form oder Farbgebung aufweisen, die diese als solche kennzeichnen. Dazu können die Betätigungselemente 24a, 26a beispielsweise eine Markierung aufweisen, die durch eine Signalfarbe oder ein anderes, dem Fachmann als sinnvoll erscheinendes Merkmal gebildet wird.

Bei einer Demontage werden die Formschlusselemente 16a, 18a mittels der Betätigungselemente 24a, 26a ausgelenkt. Ein Benutzer übt dabei über die Betätigungselemente 24a, 26a, beispielsweise mittels seiner Hand, eine Auslenkkraft auf die Formschlusselemente 16a, 18a des Adapters 10 aus. Dabei ist die Auslenkrichtung der Formschlusselemente 16, 18a jeweils zumindest im Wesentlichen in einer Betätigungsrichtung des entsprechenden Betätigungselements 24a, 26a orientiert. Sowohl die Betätigungselemente 24a, 26a als auch die Formschlusselemente 16a, 18a des als Wischarmadapter ausgebildeten Adapters 10a werden in Richtung einer Mittelebene des Adapters 10a ausgelenkt. Grundsätzlich ist es dabei auch denkbar, dass die Betätigungselemente 24a, 26a mittels eines dafür vorgesehenen Werkzeugs, beispielsweise einer Zange oder eines anderen, dem Fachmann als sinnvoll erscheinenden Werkzeugs, ausgelenkt werden.

Zur Verhinderung einer Rotation der Adapter 10a, 14a zueinander weist der Adapter 10a zwei weitere Formschlusselemente 30a, 32a auf. Die weiteren Formschlusselemente 30a, 32a sind dazu vorgesehen, einen wesentlichen Teil einer Wischkraft zu übertragen. Dazu sind die weiteren Formschlusselemente 30a, 32a als Erhebungen ausgebildet. Die Formschlusselemente 30a, 32a weisen eine ovale Grundform auf, wodurch eine Wischkraft des Wischerarms besonders gut von den Adaptern 10a, 14a übertragen werden kann. Die als Erhebungen ausgebildeten Formschlusselemente 30a, 32a sind auf einer unteren Anlagefläche 56a des Adapters 10a angeordnet. Jeweils eines der Formschlusselemente 30a, 32a ist entlang der Horizontalachse in einem äußeren Bereich des Adapters 10a angeordnet. Die Formschlusselemente 30a, 32a weisen dabei jeweils einen gleichen Abstand von der Mittelebene des Adapters 10a auf. Ein Formschluss, der über die Formschlusselemente 30a, 32a hergestellt werden kann, ist entlang der Vertikalachse 28a in einer Richtung offen. In dieser Richtung erfolgt auch ein Trennen der Adapter 10a, 14a voneinander. Durch die Formschlusselemente 16a, 18a werden die Adapter 10a, 14a verliersicher miteinander verbunden und somit auch die zur wesentlichen Übertragung der Wischkraft vorgesehenen Formschlusselemente 30a, 32a in ihrem Formschluss gehalten und fixiert.

Zur Anbindung der als Rastelemente ausgebildeten Formschlusselemente 16a, 18a weist der als Wischblattadapter ausgebildete Adapter 14a zwei zu den Formschlusselementen 16a, 18a korrespondierende Formschlusselemente 20a, 22a auf. Die Formschlusselemente 20a, 22a des weiteren Adapters 14a sind korrespondierend zu den Formschlusselementen 16a, 18a des Adapters 10a ausgebildet und für einen Formschluss mit diesen vorgesehen. Die Formschlusselemente 20a, 22a sind als Ausnehmungen ausgebildet und in den Grundkörper 36a des Adapters 14a eingebracht. Jedes der Formschlusselemente 20a, 22a des Adapters 14a weist einen Hinterschnitt 62a, 64a auf. In den Hinterschnitt 62a, 64a greift jeweils das entsprechende als Rastelement ausgebildete Formschlusselement 16a, 18a des Adapters 10a in einem montierten Zustand ein. Die als Ausnehmungen ausgebildeten Formschlusselemente 20a, 22a bilden mit ihren Hinterschnitten 62a, 64a in montiertem Zustand jeweils eine in axialer Richtung wirkende formschlüssige Verbindung mit dem entsprechenden als Rastelement ausgebildeten Formschlusselement 16a, 18a des Adapters 10a aus.

Zur Kopplung mit den weiteren Formschlusselementen 30a, 32a des Adapters 10a weist der weitere Adapter 14a zwei weitere Formschlusselemente 66a, 68a auf. Die Formschlusselemente 66a, 68a sind korrespondierend zu den weiteren Formschlusselementen 30a, 32a des Adapters 10a ausgebildet. Die Formschlusselemente 66a, 68a sind als Ausnehmungen ausgebildet, die eine ovale Grundform aufweisen. Die als Ausnehmungen ausgebildeten Formschlusselemente 66a, 68a sind in die Auflagefläche 56a des Grundkörpers 42a eingebracht. In einem montierten Zustand sind die als Erhebungen ausgebildeten Formschlusselemente 30a, 32a des als Wischarmadapter ausgebildeten Adapters 10a in den als Ausnehmungen ausgebildeten Formschlusselementen 66a, 68a des als Wischblattadapter ausgebildeten Adapters 14a angeordnet.

Grundsätzlich ist es hierbei auch denkbar, dass die weiteren Formschlusselemente 30a, 32a des als Wischarmadapter ausgebildeten Adapters 10a als eine Ausnehmung und die Formschlusselemente 66a, 68a des als Wischblattadapter ausgebildeten Adapters 14a als Erhebungen ausgebildet sind. Grundsätzlich ist es ebenso denkbar, dass Formschlusselemente 30a, 32a, 66a, 68a eines Adapters 10a, 14a sowohl als Erhebungen als auch als Ausnehmungen ausgebildet sind.

Das System umfasst weiter ein Windabweiserelement 70a und ein Trägerelement 72a. An der Wischvorrichtung sind das Windabweiserelement 70a, das Trägerelement 72a und das Wischblatt 12a angeordnet. Das Windabweiserelement 70a weist zwei symmetrisch ausgebildete, konkave Windabweiserflächen 74a auf, die in einem Betriebszustand auftretenden Fahrtwind abweisen und dabei die Hauptanpresskraft 40a erhöhen. Zudem ist das Windabweiserelement 70a zweigeteilt, also von zwei getrennten Bauteilen gebildet. Das Trägerelement 72a umfasst zwei Federschienen 76a. Es ist in diesem Zusammenhang jedoch auch denkbar, eine einteilige Federschiene als Trägerelement 72a einzusetzen. Das Trägerelement 72a wird bei einer Montage in eine Längsführungsschiene des Windabweiserelements 70a eingeschoben. Das Wischblatt 12a wird dabei von den Federschienen 76a beidseitig gehalten. Dazu weist das Wischblatt 12a auf jeder Seite eine Aufnahmenut 78a für das Trägerelement 72a auf. Zwei Abschlusskappen 80a, 82a schließen das Trägerelement 72a jeweils an einem Ende in eine Längsrichtung des Wischblatts 12a ab und vermeiden ein Lösen der Federschienen 76a aus der Aufnahmenut 78a. Das Wischblatt 12a ist somit in einem montierten Zustand über das Trägerelement 72a mit dem Windabweiserelement 70a verbunden.

Das Trägerelement 72a weist vier Befestigungsnasen 84a, 86a auf. Jeweils zwei Befestigungsnasen 84a weisen in eine Richtung, die entgegengesetzt zu einer Richtung der anderen beiden Befestigungsnasen 86a verläuft. Der Grundkörper 36a des als Wischblattadapter ausgebildeten weiteren Adapters 14a weist vier Befestigungsausnehmungen 88a auf, die mit den Befestigungsnasen 84a, 86a in ihrer Form korrespondieren. Für eine Montage des als Wischblattadapter ausgebildeten weiteren Adapters 14a mit dem Trägerelement werden die Befestigungsnasen 84a, 86a in die Befestigungsausnehmungen 88a eingeführt. Es sind ferner viele weitere, dem Fachmann als sinnvoll erscheinende Befestigungsmethoden zur Befestigung des Trägerelements 72a mit dem als Wischblattadapter ausgebildeten weiteren Adapter 14a denkbar, wie insbesondere ein Einhängen eines Trägerelements in eine Führungsschiene des als Wischblattadapter ausgebildeten weiteren Adapters 14a. Ferner ist ein Umschließen des Grundkörpers 36a von einem Trägerelement denkbar. Des Weiteren ist es auch denkbar, das Trägerelement 72a mit dem Grundkörper 36a zu verkleben, zu verschrauben und/oder zu vernieten. Ist der Grundkörper 36a des als Wischblattadapter ausgebildeten weiteren Adapters 14a von einem Metallteil gebildet, kann eine Verbindung eines Trägerelements auch durch eine Schweiß- oder Lötverbindung erfolgen.

Grundsätzlich ist es auch denkbar, dass die als Rastelemente ausgebildeten Formschlusselemente 16a, 18a von dem weiteren, als Wischblattadapter ausgebildeten Adapter 14a und die als Ausnehmungen ausgebildeten Formschlusselemente 20a, 22a von dem als Wischarmadapter ausgebildeten Adapter 10a ausgebildet werden.

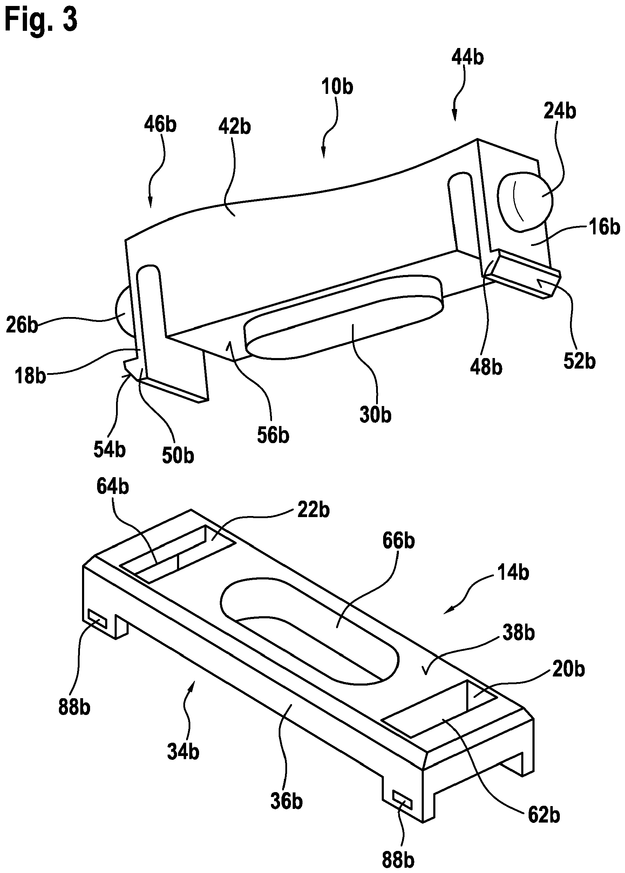

In den Figuren 3 bis 9 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In den Ausführungsbeispielen der Figuren 3 bis 9 ist der Buchstabe a durch die Buchstaben b bis h ersetzt.

Figur 3 zeigt ein erfindungsgemäßes System mit einer Wischvorrichtung und einem weiteren Adapter 14b in einem zweiten Ausführungsbeispiel. Die Wischvorrichtung umfasst einen Adapter 10b, der eine nicht näher dargestellte Anlenkstelle zu einem Wischarm aufweist. Eine Ausgestaltung von Formschlusselementen 16b, 18b, 20b, 22b des Adapters 10b und des weiteren Adapters 14b, die für eine formschlüssige Verbindung in einer Axialrichtung vorgesehen sind, und von Betätigungselementen 24b, 26b ist identisch zu dem vorherigen Ausführungsbeispiel aus Figur 1 und Figur 2.

Lediglich eine Ausgestaltung der weiteren Formschlusselemente der Adapter 10b, 14b, die zur Vermeidung einer Rotation der Adapter 10b, 14b zueinander vorgesehen sind, unterscheidet sich von dem vorherigen Ausführungsbeispiel. Der als Wischarmadapter ausgebildete Adapter 10b weist lediglich ein als Erhebung ausgebildetes Formschlusselement 30b auf. Das als Erhebung ausgebildete Formschlusselement 30b weist eine ovale Grundform auf. Das Formschlusselement 30b erstreckt sich über einen großen Teil einer unteren Anlagefläche 56b des einen Grundkörpers 42b des Adapters 10b. Dabei ist ein Formschlusselement 32b symmetrisch zu einer Mittelebene des Adapters 10b angeordnet. Der weitere Adapter 14b weist ein zu dem weiteren Formschlusselement 32b korrespondierendes weiteres Formschlusselement 66b auf. Das weitere Formschlusselement 66b des Adapters 14b ist als eine Ausnehmung ausgebildet und weist eine ovale Grundform wie das Formschlusselement 32b des Adapters 10b auf.

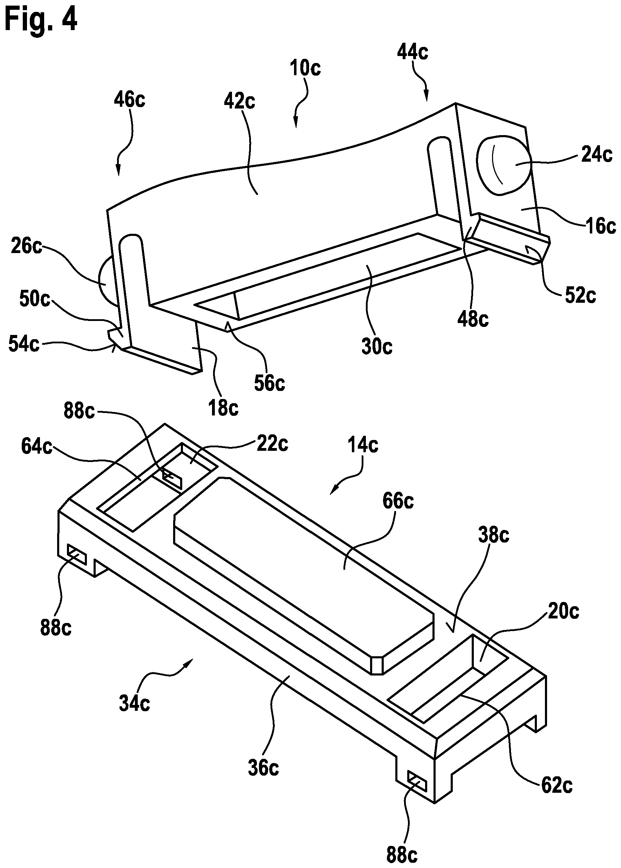

Figur 4 zeigt ein erfindungsgemäßes System mit einer erfindungsgemäßen Wischvorrichtung und einem weiteren Adapter 14c in einem dritten Ausführungsbeispiel. Die Wischvorrichtung umfasst einen Adapter 10c, der eine nicht näher dargestellte Anlenkstelle zu einem Wischarm aufweist. Eine Ausgestaltung von Formschlusselementen 16c, 18c, 20c, 22c des Adapters 10c und des weiteren Adapters 14c, die für eine formschlüssige Verbindung in einer Axialrichtung vorgesehen sind, und von Betätigungselementen 24c, 26c ist identisch zu dem ersten Ausführungsbeispiel aus Figur 1 und Figur 2. Äquivalent zu dem zweiten Ausführungsbeispiel aus Figur 3 weist der Adapter 10c lediglich ein weiteres Formschlusselement 32c auf. Dabei weist dieses Formschlusselement 32c im Gegensatz zum vorherigen Ausführungsbeispiel eine rechteckige Grundform auf. Weiterhin ist hierbei das Formschlusselement 32c des als Wischarmadapter ausgebildeten Adapters 10c als eine Ausnehmung ausgebildet. Ein korrespondierendes Formschlusselement 66c des als Wischblattadapter ausgebildeten Adapters 14c ist als eine Erhebung ausgebildet.

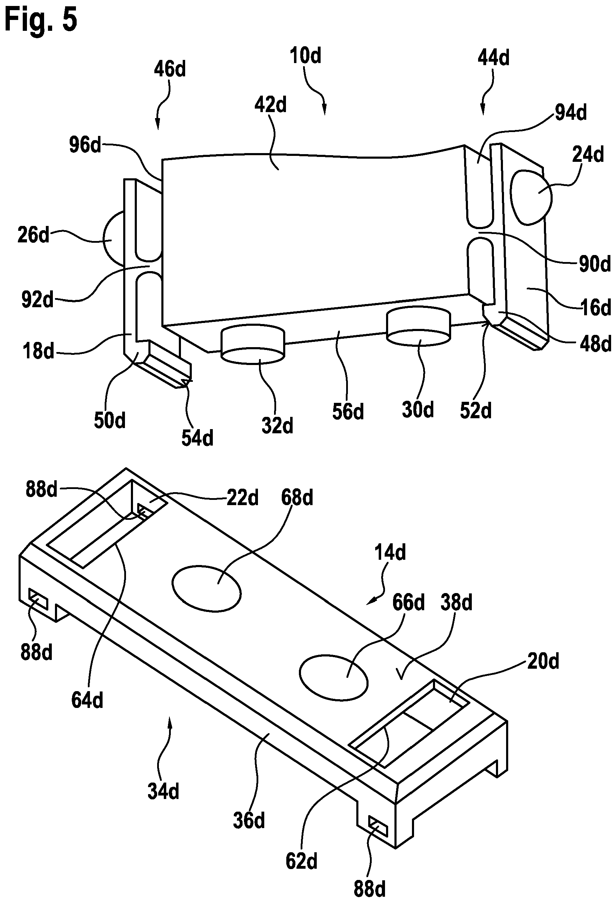

Figur 5 zeigt ein erfindungsgemäßes System mit einer Wischvorrichtung und einem weiteren Adapter 14d in einem vierten Ausführungsbeispiel. Die Wischvorrichtung umfasst einen Adapter 10d, der eine nicht näher dargestellte Anlenkstelle zu einem Wischarm aufweist. Der als Wischarmadapter ausgebildete Adapter 10d weist einen Grundkörper 42d auf, der an zwei gegenüberliegenden Seiten jeweils ein Formschlusselement 16d, 18d umfasst. Die zwei Formschlusselemente 16d, 18d sind zur formschlüssigen Verbindung des Adapters 10d in einer Axialrichtung vorgesehen. Die Formschlusselemente 16d, 18d sind einstückig mit dem Grundkörper 42d des Adapters 10d ausgebildet. Die Formschlusselemente 16d, 18d weisen jeweils eine Umlenkstelle 90d, 92d auf, über die sie mit dem Grundkörper 42d des Adapters 10d verbunden sind. Dabei bilden die Umlenkstellen 90d, 92d jeweils eine Verbindung zwischen dem entsprechenden Formschlusselement 16d, 18d und dem Grundkörper 42d des Adapters 10d aus. Dabei fixiert die Umlenkstelle 90d, 92d die Formschlusselemente 16d, 18d jeweils beabstandet zu einer Außenwandung 94d, 96d des Grundkörpers 42d des Adapters 10d. Dadurch können die Formschlusselemente 16d, 18d über die Umlenkstelle 90d, 92d relativ zu dem Grundkörper 42d des Adapters 10d bewegt und ausgelenkt werden. Die Umlenkstellen 90d, 92d sind in der Axialrichtung in etwa in der Mitte des Adapters 10d angeordnet. Die Formschlusselemente 16d, 18d stehen dabei in Axialrichtung auf beiden Seiten über die entsprechende Umlenkstelle 90d, 92d hinaus. Durch die Umlenkstelle 90d, 92d wird ein in Axialrichtung oberhalb der Umlenkstelle 90d, 92d angeordneter Bereich des entsprechenden Formschlusselements 16d, 18d in eine entgegengesetzte Richtung ausgelenkt wie ein in Axialrichtung unterhalb der Umlenkstelle 90d, 92d angeordneter Bereich des entsprechenden Formschlusselements 16d, 18d.

Die als Rastelemente ausgebildeten Formschlusselemente 16d, 18d weisen an ihrer, dem weiteren Adapter 14d in einem montierten Zustand zugewandten Seite eine Hakenform 48d, 50d auf. Die Hakenform 48d, 50d ist dabei nach innen, also in Richtung einer Mittelebene des Adapters 10d, gerichtet. Die Hakenformen 48d, 50d bilden an ihrer Unterseite jeweils eine Auslenkschräge 52d, 54d aus, die während eines Montagevorgangs dazu vorgesehen ist, das entsprechende Formschlusselement 16d, 18d durch Kontakt mit dem weiteren Adapter 14d auszulenken. Die Auslenkschrägen 52d, 54d sind ebenfalls in Richtung der Mittelebene des Adapters 10d gerichtet, so dass die Formschlusselemente 16d, 18d während der Montage mittels der Auslenkschrägen 52d, 54d nach außen, weg von der Mittelebene des Adapters 10d, ausgelenkt werden. Eine Auslenkrichtung der als Rastelemente ausgebildeten Formschlusselemente 16d, 18d ist nach außen, von der Mittelebene des Adapters 10d weg gerichtet.

Die Wischvorrichtung umfasst zwei Betätigungselemente 24d, 26d, die zur Auslenkung der Formschlusselemente 16d, 18d des Adapters 10d bei einer Demontage dazu vorgesehen sind, händisch ausgelenkt zu werden. Die Betätigungselemente 24d, 26d sind als Erhebungen auf einer Außenseite der Formschlusselemente 16d, 18d ausgebildet. Dabei sind die Betätigungselemente 24d, 26d einstückig mit den Formschlusselementen 16d, 18d ausgebildet. Die Betätigungselemente 24d, 26d sind jeweils in einem dem weiteren Adapter 14d in montiertem Zustand abgewandten Bereich des entsprechenden Formschlusselements 16d, 18d oberhalb der entsprechenden Umlenkstelle 90d, 92d angeordnet. Eine Betätigungsrichtung, in der ein Benutzer die Betätigungselemente 24d, 26d händisch auslenkt, ist in Richtung der Mittelebene des Adapters 10d gerichtet.

Bei einer Demontage werden die Formschlusselemente 16d, 18d mittels der Betätigungselemente 24d, 26d ausgelenkt. Ein Benutzer übt dabei über die Betätigungselemente 24d, 26d, beispielsweise mittels seiner Hand, eine Auslenkkraft auf die Formschlusselemente des Adapters 10d aus. Dabei ist die Auslenkrichtung der Formschlusselemente 16d, 18d jeweils zumindest im Wesentlichen entgegengesetzt zu der Betätigungsrichtung des entsprechenden Betätigungselements 24d, 26d orientiert.

Der weitere Adapter 14d ist im Wesentlichen gleich ausgestaltet, wie in den vorherigen Ausführungsbeispielen beschrieben. Lediglich Formschlusselemente 20d, 22d, die zur formschlüssigen Verbindung mit den als Rastelementen ausgebildeten Formschlusselementen 16d, 18d vorgesehen sind, sind auf die umgekehrte Form der Hakenformen 48d, 50d der Formschlusselemente 16d, 18d des Adapters 10d angepasst und weisen ihren Hinterschnitt 62d, 64d an einer der Mittelebene des Adapters 10d zugewandten Seite des entsprechenden Formschlusselements 20d, 22d auf.

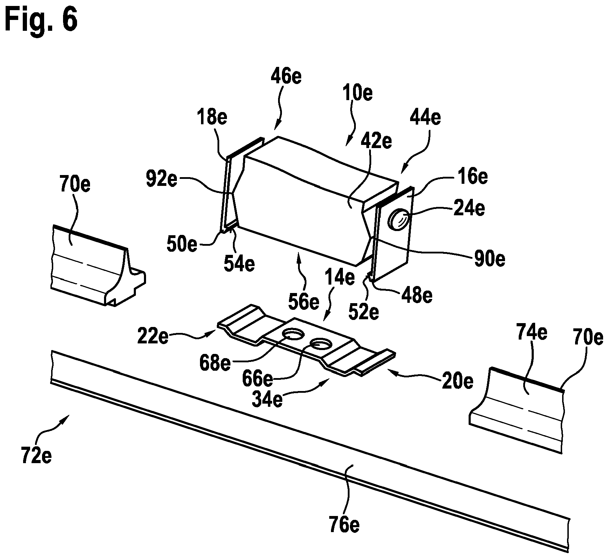

Figur 6 zeigt ein erfindungsgemäßes System mit einer Wischvorrichtung und einem weiteren Adapter 14e in einem fünften Ausführungsbeispiel. Die Wischvorrichtung umfasst einen Adapter 10e, der eine nicht näher dargestellte Anlenkstelle zu einem Wischarm aufweist. Eine Ausgestaltung von Formschlusselementen 16e, 18e des Adapters 10e und von Betätigungselementen 24e, 26e ist identisch zu dem vorherigen Ausführungsbeispiel aus Figur 5. Im Unterschied zu den vorherigen Ausführungsbeispielen ist der weitere Adapter 14e aus einem gebogenen Metallblech gebildet. Der weitere Adapter 14e ist dabei beispielsweise mittels eines Schweißverfahrens oder einer anderen, dem Fachmann als sinnvoll erscheinenden Art und Weise unlösbar mit einer Federschiene 76e des Systems verbunden. Dabei muss die als Trägerelement 72e ausgebildete Federschiene 76e als eine ungeschlitzte Federschiene ausgebildet sein. Zwei zu den als Rastelementen ausgebildeten Formschlusselementen 16e, 18e des Adapters 10e korrespondierend ausgebildete Formschlusselemente 20e, 22e des weiteren Adapters 14e sind derart ausgebildet, dass der aus einem gebogenen Metallblech gebildete Adapter 14e an seinen orthogonal zu der Horizontalachse stehenden Enden jeweils einen in Richtung des Adapters 10e gebogenen Absatz aufweist. Unter diese Absätze können die als Rastelemente ausgebildeten Formschlusselemente 16e, 18e für einen Formschluss mit den entsprechenden Formschlusselementen 22e, 24e des weiteren Adapters 14e eingreifen.

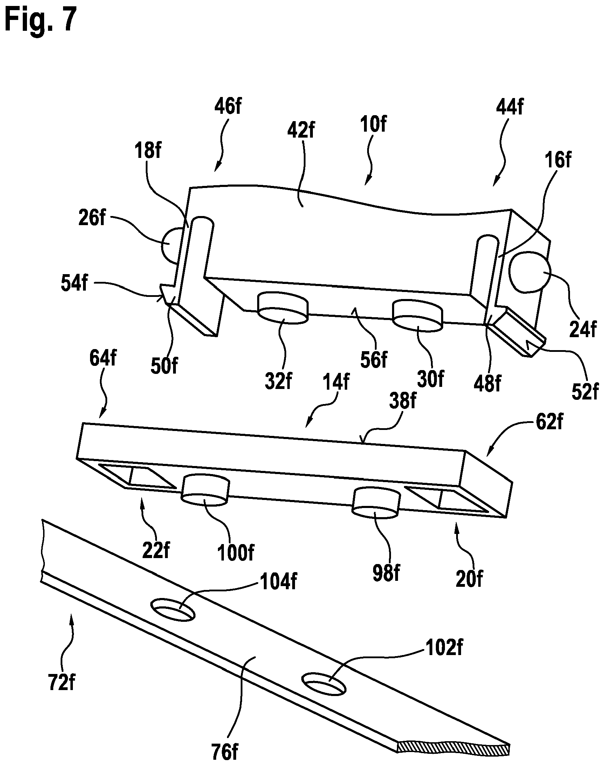

Figur 7 zeigt ein erfindungsgemäßes System mit einer Wischvorrichtung und einem weiteren Adapter 14f in einem sechsten Ausführungsbeispiel. Die Wischvorrichtung umfasst einen Adapter 10f, der eine nicht näher dargestellte Anlenkstelle zu einem Wischarm aufweist. Eine Ausgestaltung von Formschlusselementen 16f, 18f, 20f, 22f des Adapters 10f und des weiteren Adapters 14f, die für eine formschlüssige Verbindung in einer Axialrichtung vorgesehen sind, und von Betätigungselementen 24f, 26f ist identisch zu dem ersten Ausführungsbeispiel aus Figur 1. Im Unterschied dazu weist der weitere Adapter 14d zur Verbindung mit einer ungeschlitzten Federschiene 76f an seiner dem Adapter 10f im montierten Zustand abgewandten Seite zwei Erhebungen 98f, 100f auf, mittels deren der weitere Adapter 14f durch ein Wärmeprägeverfahren mit der Federschiene 76f unlösbar verbunden wird. Dazu weist die Federschiene 76f zwei Aufnahmen 102f, 104f auf, in die die Erhebungen 98f, 100f des weiteren Adapters 14f zu einer Verbindung des Adapters 14f mit der Federschiene 76f eingeführt werden.

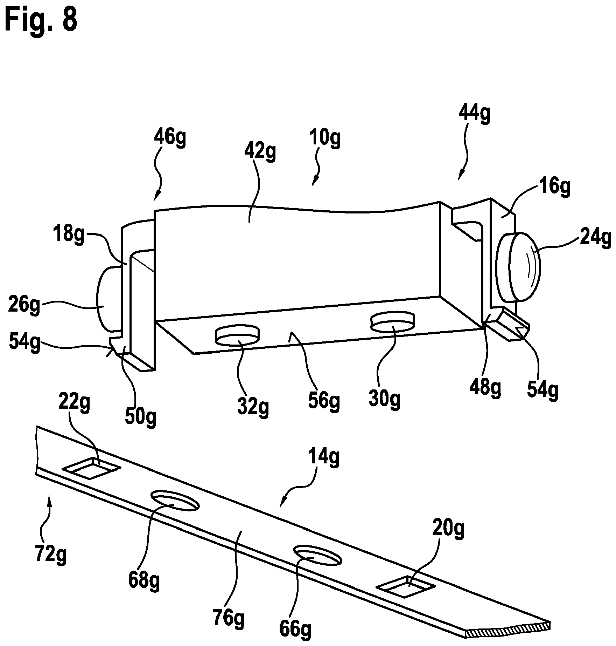

Figur 8 zeigt ein erfindungsgemäßes System mit einer Wischvorrichtung und einem weiteren Adapter 14g in einem siebten Ausführungsbeispiel. Die Wischvorrichtung umfasst einen Adapter 10g, der eine nicht näher dargestellte Anlenkstelle zu einem Wischarm aufweist. Eine Ausgestaltung von Formschlusselementen 16g, 18g und weiteren Formschlusselementen 30g, 32g des Adapters 10g und von Betätigungselementen 24g, 26g ist identisch zu dem ersten Ausführungsbeispiel aus Figur 1. Im Unterschied dazu ist der weitere Adapter 14g als eine Federschiene 76g ausgebildet. Die als weiterer Adapter 14g ausgebildete Federschiene 76g ist dabei als eine ungeschlitzte Federschiene gebildet. Zu den Formschlusselementen 16g, 18g, 30g, 32g des Adapters 10g korrespondierende Formschlusselemente 20g, 22g und weitere Formschlusselemente 66g, 68g sind dabei als Ausnehmungen in die ungeschlitzte Federschiene 76g eingebracht. Im Unterscheid zu den vorherigen Ausführungsbeispielen müssen allerdings hierbei die als Rastelemente ausgebildeten Formschlusselemente 16g, 18g des Adapters 10g massiver ausgestaltet werden, also beispielsweise dickere Wandungen aufweisen, da sie in diesem Ausführungsbeispiel größere Kräfte übertragen müssen, da die weiteren Formschlusselemente 30g, 32g, 66g, 68g der Adapter 10g, 14g durch eine geringe Höhe, die die Federschiene 76g zur Übertragung von Kräften bereitstellt, weniger Kräfte übertragen können.

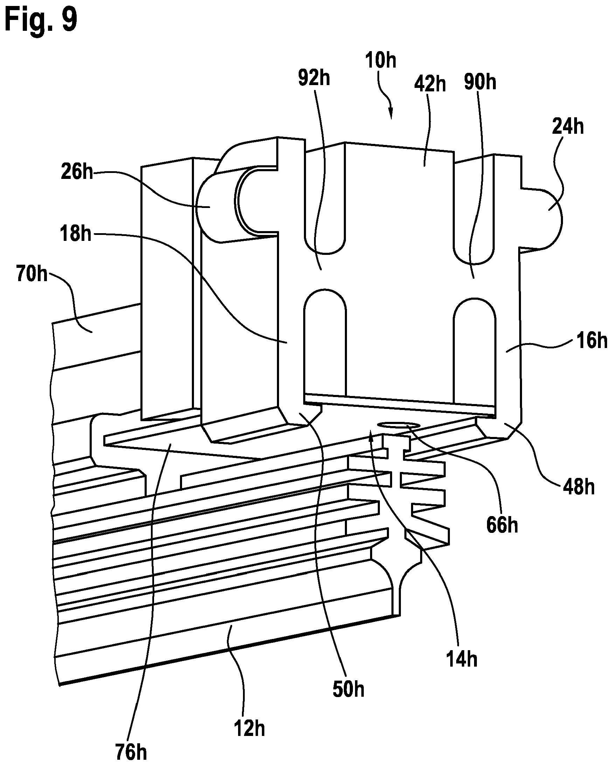

Figur 9 zeigt ein erfindungsgemäßes System mit einer Wischvorrichtung und einem weiteren Adapter 14h in einem achten Ausführungsbeispiel. Die Wischvorrichtung umfasst einen Adapter 10h, der eine nicht näher dargestellte Anlenkstelle zu einem Wischarm aufweist. Der weitere Adapter 14h ist wie in dem vorherigen Ausführungsbeispiel aus Figur 8 als eine Federschiene 76h ausgebildet. Der Adapter 10 weist zwei als Rastelemente ausgebildete Formschlusselemente 16h, 18h auf. Im Unterschied zu den vorhergehenden Ausgestaltungen sind die Formschlusselemente 16h, 18h des Adapters 10h an parallel zu der Horizontalache verlaufenden Enden des Adapters 10h angeordnet. Die Formschlusselemente 16h, 18h sind parallel zu der Horizontalachse ausgerichtet. Eine Auslenkrichtung der Formschlusselemente 16h, 18h steht dabei senkrecht zu der Horizontalachse. Eine grundsätzliche Ausgestaltung der als Rastelemente ausgebildeten Formschlusselemente 16h, 18h ist im Wesentlichen identisch zu der Ausgestaltung der entsprechenden als Rastelemente ausgebildeten Formschlusselemente aus dem vierten Ausführungsbeispiel aus Figur 5 bzw. aus dem siebten Ausführungsbeispiel aus Figur 8.

Weitere, als Erhöhungen ausgebildete Formschlusselemente 30h des Adapters 10h sind prinzipiell gleich ausgestaltet wie in dem ersten Ausführungsbeispiel aus Figur 1. Sie greifen in einem montierten Zustand in korrespondierende weitere Formschlusselemente 66h ein, die als Ausnehmungen in den als Federschiene 76h ausgebildeten weiteren Adapter 14h eingebracht sind. Zur formschlüssigen Verbindung in einer Axialrichtung greifen die als Rastelemente ausgebildeten Formschlusselemente 16h, 18h in die Federschiene 76h ein. Die Formschlusselemente 16h, 18h greifen mit ihren Hakenformen 48h, 50h seitlich orthogonal zu der Horizontalachse unter die Federschiene 76h und bilden so einen Formschluss in Axialrichtung.

Grundsätzlich ist es denkbar, dass die verschiedenen, in den Ausführungsbeispielen beschriebenen Ausgestaltungen der als Rastelemente ausgebildeten Formschlusselemente, der als Ausnehmungen ausgebildeten Formschlusselemente, der als Erhebungen ausgebildeten weiteren Formschlusselemente und/oder die Anbindungen des weiteren Adapters an ein Trägerelement bzw. eine Federschiene in verschiedener, dem Fachmann als sinnvoll erscheinender Weise kombiniert werden.

## Patentansprüche

1. Wischvorrichtung mit einem Adapter (10a; 10b; 10c; 10d; 10e; 10f; 10g; 10h), der eine Anlenkstelle zu einem Wischarm oder einem Wischblatt (12a; 12e; 12h) bildet und für eine translatorische Montage in einer Axialrichtung mit einem weiteren Adapter (14a; 14b; 14c; 14d; 14e; 14f; 14g; 14h) zumindest ein Formschlusselement (16a, 18a; 16b, 18b; 16c, 18c; 16d, 18d; 16e, 18e; 16f, 18f; 16g, 18g; 16h, 18h) aufweist, das zur formschlüssigen Verbindung in der Axialrichtung mit zumindest einem Formschlusselement (20a, 22a; 20b, 22b; 20c, 22c; 20d, 22d; 20e, 22e; 20f, 22f; 20g, 22g; 20h, 22h) des einen weiteren Adapters (14a; 14b; 14c; 14d; 14e; 14f; 14g; 14h) vorgesehen ist und mit zumindest ein Betätigungselement (24a, 26a; 24b, 26b; 24c, 26c; 24d, 26d; 24e, 26e; 24f, 26f; 24g, 26g; 24h, 26h), das zur Auslenkung des zumindest einen Formschlusselements (20a, 22a; 20b, 22b; 20c, 22c; 20d, 22d; 20e, 22e; 20f, 22f; 20g, 22g; 20h, 22h) bei einer Demontage dazu vorgesehen ist, ausgelenkt zu werden, **dadurch gekennzeichnet, dass** der Adapter zumindest ein weiteres Formschlusselement (30a, 32a; 30b, 32b; 30c, 32c; 30d, 32d; 30e, 32e; 30f, 32f; 30g, 32g; 30h, 32h) aufweist, das zu einer formschlüssigen Verbindung mit dem weiteren Adapter (14a; 14b; 14c; 14d; 14e; 14f; 14g; 14h) vorgesehen ist, die dazu vorgesehen ist, irgendeine Rotation der Adapter (10a, 14a; 10b, 14b; 10c, 14c; 10d, 14d; 10e, 14e; 10f, 14f; 10g, 14g; 10h, 14h) zueinander zu verhindern.

2. Wischvorrichtung nach Anspruch 1, **dadurch gekennzeichnet, dass** das zumindest eine Betätigungselement (24a, 26a; 24b, 26b; 24c, 26c; 24d, 26d; 24e, 26e; 24f, 26f; 24g, 26g; 24h, 26h) als Handbetätigungselement ausgebildet und dazu vorgesehen ist, händisch ausgelenkt zu werden.

3. Wischvorrichtung nach Anspruch 1 oder 2, **dadurch gekennzeichnet, dass** der Adapter (10a; 10b; 10c; 10d; 10e; 10f; 10g; 10h) als ein Wischarmadapter ausgebildet ist.

4. Wischvorrichtung nach einem der vorhergehenden Ansprüche, **dadurch gekennzeichnet, dass** die Axialrichtung parallel zu einer Vertikalachse (28a) verläuft.

5. Wischvorrichtung nach einem der vorhergehenden Ansprüche, **dadurch gekennzeichnet, dass** das zumindest eine Formschlusselement (16a, 18a; 16b, 18b; 16c, 18c; 16d, 18d; 16e, 18e; 16f, 18f; 16g, 18g; 16h, 18h) an einer Außenseite (46a) des Adapters (10a; 10b; 10c; 10d; 10e; 10f; 10g; 10h) angeordnet ist.

6. Wischvorrichtung nach Anspruch 1, **dadurch gekennzeichnet, dass** das zumindest eine Formschlusselement (16a, 18a; 16b, 18b; 16c, 18c; 16d, 18d; 16e, 18e; 16f, 18f; 16g, 18g; 16h, 18h) des Adapters (10a; 10b; 10c; 10d; 10e; 10f; 10g; 10h) als ein Rastelement ausgebildet ist, das dazu vorgesehen ist, während einer Montage ausgelenkt zu werden.

7. Wischvorrichtung nach einem der vorhergehenden Ansprüche, **dadurch gekennzeichnet, dass** das zumindest eine Formschlusselement (16a, 18a; 16b, 18b; 16c, 18c; 16f, 18f; 16g, 18g) eine Auslenkrichtung aufweist, die zumindest im Wesentlichen in einer Betätigungsrichtung des zumindest einen Betätigungselements (24a, 26a; 24b, 26b; 24c, 26c; 24f, 26f; 24g, 26g) orientiert ist.

8. Wischvorrichtung nach einem der vorhergehenden Ansprüche, **dadurch gekennzeichnet, dass** das zumindest eine als Rastelement ausgebildete Formschlusselement (16d, 18d; 16e, 18e; 16h, 18h) eine Auslenkrichtung aufweist, die zumindest im Wesentlichen entgegengesetzt zu einer Betätigungsrichtung des zumindest einen Betätigungselements (24d, 26d; 24e, 26e; 24h, 26h) orientiert ist.

9. System mit einer Wischvorrichtung nach einem der vorhergehenden Ansprüche und dem weiteren Adapter (14a; 14b; 14c; 14d; 14e; 14f; 14g; 14h), **dadurch gekennzeichnet, dass** der weitere Adapter (14a; 14b; 14c; 14d; 14e; 14f; 14g; 14h) als ein Wischblattadapter ausgebildet ist.

10. System mit einer Wischvorrichtung, **dadurch gekennzeichnet, dass** der weitere Adapter (14g; 14h) als eine Federschiene (76g; 76h) ausgebildet ist.

## Claims

1. Wiper device with an adapter (10a; 10b; 10c; 10d; 10e; 10f; 10g; 10h) which forms a pivot point to a wiper arm or wiper blade (12a; 12e; 12h) and has at least one form-fit element (16a, 18a; 16b, 18b; 16c, 18c; 16d, 18d; 16e, 18e; 16f, 18f; 16g, 18g; 16h, 18h) which is provided for translational mounting in an axial direction with a further adapter (14a; 14b; 14c; 14d; 14e; 14f; 14g; 14h) and for form-fit connection in the axial direction with at least one form-fit element (20a, 22a; 20b, 22b; 20c, 22c; 20d, 22d; 20e, 22e; 20f, 22f; 20g, 22g; 20h, 22h) of the one further adapter (14a; 14b; 14c; 14d; 14e; 14f; 14g; 14h) and with at least one actuating element (24a, 26a; 24b, 26b; 24c, 26c; 24d, 26d; 24e, 26e; 24f, 26f; 24g, 26g; 24h, 26h) is provided to be deflected in order to deflect the at least one form-fit element (20a, 22a; 20b, 22b; 20c, 22c; 20d, 22d; 20e, 22e; 20f, 22f; 20g, 22g; 20h, 22h) on dismantling, **characterized in that** the adapter has at least one further form-fit element (30a, 32a; 30b, 32b; 30c, 32c; 30d, 32d; 30e, 32e; 30f, 32f; 30g, 32g; 30h, 32h) which is provided for form-fit connection with the further adapter (14a; 14b; 14c; 14d; 14e; 14f; 14g; 14h) in order to prevent any rotation of the adapters (10a, 14a; 10b, 14b; 10c, 14c; 10d, 14d; 10e, 14e; 10f, 14f; 10g, 14g; 10h, 14h) in relation to each other.

2. Wiper device according to Claim 1, **characterized in that** the at least one actuating element (24a, 26a; 24b, 26b; 24c, 26c; 24d, 26d; 24e, 26e; 24f, 26f; 24g, 26g; 24h, 26h) is formed as a manual actuating element and is provided to be deflected manually.

3. Wiper device according to Claim 1 or 2, **characterized in that** the adapter (10a; 10b; 10c; 10d; 10e; 10f; 10g; 10h) is formed as a wiper arm adapter.

4. Wiper device according to any of the preceding claims, **characterized in that** the axial direction runs parallel to a vertical axis (28a).

5. Wiper device according to any of the preceding claims, **characterized in that** at least one form-fit element (16a, 18a; 16b, 18b; 16c, 18c; 16d, 18d; 16e, 18e; 16f, 18f; 16g, 18g; 16h, 18h) is arranged on an outside (46a) of the adapter (10a; 10b; 10c; 10d; 10e; 10f; 10g; 10h).

6. Wiper device according to Claim 1, **characterized in that** at least one form-fit element (16a, 18a; 16b, 18b; 16c, 18c; 16d, 18d; 16e, 18e; 16f, 18f; 16g, 18g; 16h, 18h) of the adapter (10a; 10b; 10c; 10d; 10e; 10f; 10g; 10h) is formed as a catch element which is provided to be deflected during mounting.

7. Wiper device according to any of the preceding claims, **characterized in that** the at least one form-fit element (16a, 18a; 16b, 18b; 16c, 18c; 16f, 18f; 16g, 18g) has a deflection direction which is oriented at least substantially in an actuation direction of the at least one actuating element (24a, 26b; 24b, 26b; 24c, 26c; 24f, 26f; 24g, 26g).

8. Wiper device according to any of the preceding claims, **characterized in that** the at least one form-fit element (16d, 18d; 16e, 18e; 16h, 18h) formed as a catch element has a deflection direction which runs at least substantially opposite an actuation direction of the at least one actuating element (24d, 26d; 24e, 26e; 24h, 26h).

9. System with a wiper device according to any of the preceding claims and the further adapter (14a; 14b; 14c; 14d; 14e; 14f; 14g; 14h), **characterized in that** the further adapter (14a; 14b; 14c; 14d; 14e; 14f; 14g; 14h) is formed as a wiper blade adapter.

10. System with a wiper device, **characterized in that** the further adapter (14g; 14h) is formed as a spring rail (76g; 76h).

## Revendications

1. Ensemble d'essuie-glace avec un adaptateur (10a; 10b; 10c; 10d; 10e; 10f; 10g; 10h), qui forme un point d'articulation pour un bras d'essuie-glace ou un balai d'essuie-glace (12a; 12e; 12h) et qui présente, pour un montage en translation dans une direction axiale avec un autre adaptateur (14a; 14b; 14c; 14d; 14e; 14f; 14g; 14h), au moins un élément d'emboîtement (16a, 18a; 16b, 18b; 16c, 18c; 16d, 18d; 16e, 18e; 16f, 18f; 16g, 18g; 16h, 18h), qui est prévu pour l'assemblage par emboîtement dans la direction axiale avec au moins un élément d'emboîtement (20a, 22a; 20b, 22b; 20c, 22c; 20d, 22d; 20e, 22e; 20f, 22f; 20g, 22g; 20h, 22h) de l'autre adaptateur (14a; 14b; 14c; 14d; 14e; 14f; 14g; 14h) et avec au moins un élément d'actionnement (24a, 26a; 24b, 26b; 24c, 26c; 24d, 26d; 24e, 26e; 24f, 26f; 24g, 26g; 24h, 26h), qui est prévu pour être dévié lors d'un démontage, pour la déviation dudit au moins un élément d'emboîtement (20a, 22a; 20b, 22b; 20c, 22c; 20d, 22d; 20e, 22e; 20f, 22f; 20g, 22g; 20h, 22h), **caractérisé en ce que** l'adaptateur présente au moins un autre élément d'emboîtement (30a, 32a; 30b, 32b; 30c, 32c; 30d, 32d; 30e, 32e; 30f, 32f; 30g, 32g; 30h, 32h), qui est prévu pour un assemblage par emboîtement avec l'autre adaptateur (14a; 14b; 14c; 14d; 14e; 14f; 14g; 14h), prévu pour empêcher toute rotation des adaptateurs (10a, 14a; 10b, 14b; 10c, 14c; 10d, 14d; 10e, 14e; 10f, 14f; 10g, 14g; 10h, 14h) l'un par rapport à l'autre.

2. Ensemble d'essuie-glace selon la revendication 1, **caractérisé en ce que** ledit au moins un élément d'actionnement (24a, 26a; 24b, 26b; 24c, 26c; 24d, 26d; 24e, 26e; 24f, 26f; 24g, 26g; 24h, 26h) est formé par un élément d'actionnement manuel et est prévu pour être dévié manuellement.

3. Ensemble d'essuie-glace selon la revendication 1 ou 2, **caractérisé en ce que** l'adaptateur (10a; 10b; 10c; 10d; 10e; 10f; 10g; 10h) est formé par un adaptateur de bras d'essuie-glace.

4. Ensemble d'essuie-glace selon l'une quelconque des revendications précédentes, **caractérisé en ce que** la direction axiale s'étend parallèlement à un axe vertical (28a).

5. Ensemble d'essuie-glace selon l'une quelconque des revendications précédentes, **caractérisé en ce que** ledit au moins un élément d'emboîtement (16a, 18a; 16b, 18b; 16c, 18c; 16d, 18d; 16e, 18e; 16f, 18f; 16g, 18g; 16h, 18h) est disposé sur un côté extérieur (46a) de l'adaptateur (10a; 10b; 10c; 10d; 10e; 10f; 10g; 10h).

6. Ensemble d'essuie-glace selon la revendication 1, **caractérisé en ce que** ledit au moins un élément d'emboîtement (16a, 18a; 16b, 18b; 16c, 18c; 16d, 18d; 16e, 18e; 16f, 18f; 16g, 18g; 16h, 18h) de l'adaptateur (10a; 10b; 10c; 10d; 10e; 10f; 10g; 10h) est formé par un élément d'encliquetage, qui est prévu pour être dévié pendant un montage.

7. Ensemble d'essuie-glace selon l'une quelconque des revendications précédentes, **caractérisé en ce que** ledit au moins un élément d'emboîtement (16a, 18a; 16b, 18b; 16c, 18c; 16f, 18f; 16g, 18g) présente une direction de déviation, qui est orientée au moins essentiellement dans une direction d'actionnement dudit au moins un élément d'actionnement (24a, 26a; 24b, 26b; 24c, 26c; 24f, 26f; 24g, 26g).

8. Ensemble d'essuie-glace selon l'une quelconque des revendications précédentes, **caractérisé en ce que** ledit au moins un élément d'emboîtement (16d, 18d; 16e, 18e; 16h, 18h) formé par un élément d'encliquetage présente une direction de déviation, qui est orientée au moins essentiellement à l'opposé d'une direction d'actionnement dudit au moins un élément d'actionnement (24d, 26d; 24e, 26e; 24h, 26h).

9. Système avec un ensemble d'essuie-glace selon l'une quelconque des revendications précédentes et avec l'autre adaptateur (14a; 14b; 14c; 14d; 14e; 14f; 14g; 14h), **caractérisé en ce que** l'autre adaptateur (14a; 14b; 14c; 14d; 14e; 14f; 14g; 14h) est formé par un adaptateur de balai d'essuie-glace.

10. Système avec un ensemble d'essuie-glace, **caractérisé en ce que** l'autre adaptateur (14g; 14h) est formé par un rail élastique (76g; 76h).
